# EUROPEAN PATENT SPECIFICATION

(11) **EP 3 919 295 B1**
(45) Date of publication and mention of the grant of the patent: **30.04.2025**
(21) Application number: 21177394.0
(22) Date of filing: 02.06.2021
(51) Int. Cl.: B60C 11/12

(54) **A PNEUMATIC TIRE WITH 3D KERF**
LUFTREIFEN MIT 3D-KERBE
PNEU COMPORTANT UNE ENTAILLE EN 3D

(30) Priority: 02.06.2020 KR 20200066290
(43) Date of publication of application: 08.12.2021
(73) Proprietor: HANKOOK TIRE & TECHNOLOGY CO., LTD, Gyeonggi-do 13494 (KR)
(72) Inventor: IHM, Jae Wook, Sejong-si (KR); HEO, Woo Haeng, Daejeon (KR)
(74) Representative: Stöckeler, Ferdinand

(56) References cited:
- DE-A1- 102015 115 832
- JP-A- 2000 177 329
- JP-A- 2002 192 916
- JP-A- 2009 202 705
- JP-A- 2009 292 382
- JP-A- H 071 921
- US-A- 2 929 427
- US-A1- 2012 168 049
- US-A1- 2017 129 288

## Description

### BACKGROUND OF THE INVENTION

### Field of the Invention

The present invention relates to a pneumatic tire with a 3D kerf element, and more specifically, to a pneumatic tire with a 3D kerf element for improving a snow performance.

### Description of the Related Art

A pneumatic tire is configured to include an inner liner that forms the inside of the tire, a body ply stacked on the outside of the inner liner, a belt stacked on the outside of the body ply, a tread stacked on the outside of the belt, sidewalls forming both side portions of the tire, and a bead coupled to a wheel.

In addition, the tread which grips a road surface has a specifically shaped pattern formed to enhance grip force, drainage, braking force, noise dispersion, or the like, and a shape of the pattern significantly affects a tire performance on rainy and snowy roads and a handling performance. Hence, the shape of the pattern is a major factor in tire development. A kerf is a deep groove which is often cut in a transverse direction in a tread block to have a narrow width of 1 mm or narrower, and the kerf provides cushioning to bring about a comfortable ride while enabling a ground gripping surface to be even and enhancing grip force. In addition, the kerf has a function of facilitating rapid drainage to increase driving force and braking force.

Recently, the pattern design tends to more focus on performance rather than on a simple design and an external appearance. A pattern performance technology is subdivided and changed into fine ranges for tire performance.

In addition, when a snow tire rotates on a road surface, the edge effect due to the kerf enables the snow tire to be driven and braked, and thus it is possible to ensure a snow performance of the tire during running of a vehicle.

The kerf which is applied to the snow tire for the edge effect reduces strength of a tread rubber block, thus resulting in degrading the tire performance on a dry road surface. In this respect, in order to secure the strength of a block by improving a confinement performance by a kerf in a perpendicular direction from a surface of a tire, application of a 3D kerf element is increased. In general, when a snow tire with a kerf is driven, there occurs a phenomenon in which a block of the snow tire collapses too much or a leading portion of the block is rolled inward in a moving direction of the tire, and thus there often occurs a phenomenon of a reduction in frictional force due to friction with a road surface.

The edge effect occurs at the leading portion of a tread block during driving and occurs at a tailing portion of the block during braking, and thus there occurs a phenomenon of an increase in ground grip pressure more than that at other portions in the block. The increase in ground grip pressure in a condition where a hydroplaning and a snow layer are formed between a road surface and a tire causes a friction coefficient to be increased by breaking the hydroplaning and the snow layer. A problem arises in that, as density of kerfs increases, an existing kerf structure causes the strength of a block to be decreased and has no effect on the wet and snow performance due to a reduction in edge effect with a reduction in ground grip pressure which results from an increase in block sliding and an increase in ground grip surface, or an abnormal wear phenomenon occurs.

Pneumatic tires comprising sipes, i.e., slits in a tread stock, which have different shapes, are known from US 2012/168049 A1, JP 2009 292382 A, US 2017/129288 A1, DE 10 2015 115832 A1, JP 2002 192916A, KR 10-1739506 and KR 10-1711130.

Publications JP H07 1921 A, JP 2009 202705 A and US 2 929 427 A describe 3D kerf elements to be inserted into a kerf. These 3D kerf elements may comprise different geometrical shapes, such as an arrow-shape, a zig-zag shape as well as mesh and honeycomb structures.

### SUMMARY OF THE INVENTION

An object of the invention to solve the above-described problem is to provide a pneumatic tire with a 3D kerf element which improves a snow performance by inserting the 3D kerf element into a kerf groove of a tire tread, the 3D kerf element including a top surface having a wave shape and a side surface having a trapezoid shape.

In addition, another object of the invention to solve the above-described problem is to provide a pneumatic tire with a 3D kerf element which improves a ground grip force and handling and braking performances of the tire by causing an interlocking phenomenon between blocks as one or more 3D kerf elements come into close contact with and are fixed between one or more blocks while being inserted into one or more kerf grooves.

Technical objects to be achieved by the invention are not limited to the technical objects mentioned above, and the following description enables other unmentioned technical objects to be clearly understood by a person of ordinary skill in the art to which the invention pertains.

The present invention provides a pneumatic tire according to claim 1. Further developments of the invention are defined in the dependent claims.

### BRIEF DESCRIPTION OF THE DRAWINGS

FIG. 1 is a perspective view in one direction illustrating a pneumatic tire with a 3D kerf element according to an embodiment of the invention;
FIG. 2 is a partially-detailed view illustrating enlargement of region S in FIG. 1;
FIG. 3 is a cross-sectional view taken along line a-b in FIG. 2;
FIG. 4 is a perspective view illustrating shapes of a 3D kerf element of the pneumatic tire with a 3D kerf element according to the embodiment of the invention; and
FIG. 5 is a perspective view illustrating actual shapes of the 3D kerf element of the pneumatic tire with a 3D kerf element according to the embodiment of the invention.

### DETAILED DESCRIPTION OF THE PREFERRED EMBODIMENT

Hereinafter, the invention is to be described with reference to the accompanying drawings. However, the invention can be realized as various different examples and thus is not limited to an embodiment described herein. Besides, a part unrelated to the description is omitted from the drawings in order to clearly describe the invention, and similar reference signs are assigned to similar parts through the entire specification.

In the entire specification, a case where a certain part is "connected to (attached to, in contact with, or coupled to)" another part means not only a case where the parts are "directly connected" to each other, but also a case where the parts are "indirectly connected" to each other with another member interposed therebetween. In addition, a case where a certain part "comprises" a certain configurational element does not mean that another configurational element is excluded but means that other configurational elements can be further included unless specifically described otherwise.

Terms used in this specification are only used to describe a specific embodiment and are not intentionally used to limit the invention thereto. A singular form of a noun includes a plural meaning of the noun unless obviously implied otherwise in context. In this specification, words such as "to comprise" or "to include" are to be understood to specify that a feature, a number, a step, an operation, a configurational element, a member, or a combination thereof described in the specification is present and not to exclude a possibility of presence or addition of one or more other features, numbers, steps, operations, configurational elements, members, or combinations thereof in advance.

Hereinafter, an embodiment of the invention will be described in detail with reference to the accompanying drawings.

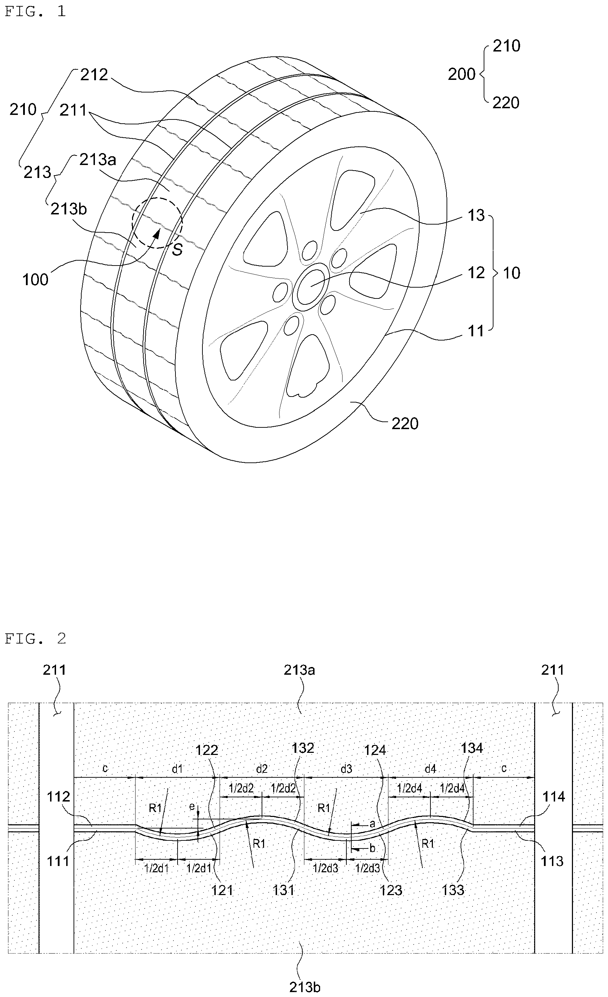

FIG. 1 is a perspective view in one direction illustrating a pneumatic tire with a 3D kerf element according to the embodiment of the invention.

First, a tire 200, into which a 3D kerf element 100 is inserted, and a tire wheel 10 which supports the tire 200 are to be described.

With reference to FIG. 1, the tire 200 has a tread 210 and a shoulder 220 formed at a side surface of the tread 210. In addition, although not illustrated in FIG. 1, a belt, an inner liner, a cap ply, a carcass, a bead, or the like can be formed on the tire 200, and these configurational elements correspond to known technologies. Hence, the detailed description thereof is to be limited.

The tread 210 includes a groove 211, a kerf groove 212, and a block 213.

The groove 211 is sunken toward a center of the tread 210 and is formed in a circumferential direction of the tire 200, thus, fulfilling a function of drainage, and one or more (three in FIG. 1) grooves 211 are formed as illustrated in FIG. 1.

The kerf grooves 212 are sunken toward the center of the tread 210 and are formed in a central axis direction of the tire 200. When the tread 210 is formed in a vertical direction based on FIG. 1, the kerf grooves 212 is formed in a horizontal direction, and one or more (36 in FIG. 1) kerf grooves 212 are formed as illustrated in FIG. 1.

In addition, a shape of the kerf groove 212 is not limited to the shape illustrated in FIG. 1, and the kerf groove is formed to have a shape such that the 3D kerf element 100 to be described below is inserted to come into close contact with one or more blocks 213.

In this respect, a side surface of the one or more blocks 213 can be formed in parallel with one or more blocks 213 to be parallel to a side surface of the 3D kerf element 100.

The blocks 213 are divided by the one or more grooves 211 and the one or more kerf grooves 212, and one or more (18 in FIG. 1 and 57 as individual blocks such as first blocks and second blocks) blocks 213 are formed as illustrated in FIG. 1.

The blocks 213 grip a road surface and enable a vehicle to be stopped due to a frictional force.

In the invention, reference signs are assigned to a pair of blocks among adjacent blocks for the description.

The pair of blocks are a first block 213a and a second block 213b.

The first block 213a and the second block 213b are divided by the groove 211 and the kerf groove 212, and thus the first block 213a and the second block 213b are positioned to be separated from each other as much as the kerf groove 212 is formed.

The shoulder 220 is formed at a side of the tread 210 and comes into close contact with the tire 200 when the tire 200 is mounted on the tire wheel 10.

With reference to FIG. 1, the tire wheel 10 includes a cylindrical rim 11 having both sides which are open, a disc 12 positioned at a central portion of the rim 11, and one or more spokes 13 which connect the rim 11 and the disc 12.

Hereinafter, a pneumatic tire with a 3D kerf element according to the embodiment of the invention is to be described with reference to FIGS. 1 to 5.

With reference to FIG. 1, the pneumatic tire with a 3D kerf element according to the embodiment of the invention includes the 3D kerf element 100 and the tire 200.

The 3D kerf element 100 is inserted into and fixed in the kerf groove 212 formed between a pair of adjacent blocks, and one or more 3D kerf elements are formed to be inserted into the one or more kerf grooves 212.

In addition, since the one or more 3D kerf elements 100 come into close contact with and are fixed between the one or more blocks 213 as being inserted into the one or more kerf grooves 212, an interlocking phenomenon between blocks occurs to improve a ground grip force and handling and braking performances of the tire 200.

The 3D kerf element 100 according to the embodiment is manufactured of one of stainless steel (SUS304, SUS301, SUS420J2, and SUS630) materials by performing bending thereon. The 3D kerf element 100 can be manufactured by performing 3D printing on one material of maraging steel, SUS630, and Ti powder, in addition to the stainless steel materials.

In addition, the frictional force changes depending on a shape of the 3D kerf element 100, and the detailed description thereof is to be provided below.

In this respect, the 3D kerf element 100 has a flat portion, a recessed portion, and a protruded portion.

FIG. 2 is a partially-detailed view illustrating enlargement of region S in FIG. 1.

The flat portion comes into close contact with and is fixed between the pair of adjacent blocks 213a and 213b among the one or more blocks 213.

With reference to FIG. 2, the flat portion includes a first flat member 111, a second flat member 112, a third flat member 113, and a fourth flat member 114 which are one or more flat members having a flat-plate shape.

The first flat member 111 has the flat-plate shape and is positioned inside the kerf groove 212 at one side.

The second flat member 112 has the same shape and size as the first flat member 111 and is coupled to the first flat member 111.

The third flat member 113 has the flat-plate shape, has the same shape and size as the first flat member 111 and the second flat member 112, and is positioned inside the kerf groove 212 at the other side.

The fourth flat member 114 has the same shape and size as the third flat member 113 and is coupled to the third flat member 113.

The first and second flat members 111 and 112 are positioned on the left side based on FIG. 2, and the third and fourth flat members 113 and 114 are positioned on the right side based on FIG. 2.

The recessed portion has a predetermined curvature and is formed to recess in one direction of the circumferential direction of the tire 200. The recessed portion includes a first recessed member 121, a second recessed member 122, a third recessed member 123, and a fourth recessed member 124 which are one or more recessed members.

As illustrated in FIG. 2, the first recessed member 121 is connected to the first flat member 111. Specifically, one side of the first recessed member 121 is connected to the other side of the first flat member 111, and the other side of the first recessed member 121 is connected to one side of a first protruded member 131.

In addition, the first recessed member 121 is formed to recess downward so as to have a predetermined curvature as illustrated in FIG. 2.

Here, a radius R1 of the first recessed member 121 is preferably 6.6021 mm; however, the radius is not limited thereto.

The second recessed member 122 is connected to the second flat member 112 and is coupled to the first recessed member 121. Specifically, one side of the second recessed member 122 is connected to the other side of the second flat member 112, and the other side of the second recessed member 122 is connected to one side of a second protruded member 132.

In addition, the second recessed member 122 is formed to recess downward so as to have a predetermined curvature as illustrated in FIG. 2.

As illustrated in FIG. 2, the third recessed member 123 is connected to a first protruded member 131. In addition, the third recessed member 123 is formed to recess downward so as to have a predetermined curvature as illustrated in FIG. 2.

Here, the radius R1 of the third recessed member 123 is preferably 6.6021 mm as the radius of the first recessed member 121; however, the radius is not limited thereto.

The fourth recessed member 124 is connected to a second protruded member 132 and is coupled to the third recessed member 123. In addition, the fourth recessed member 124 is formed to recess downward so as to have a predetermined curvature as illustrated in FIG. 2.

According to the invention, the top surface of the 3D kerf element 100 has a wave shape which bends alternately one or more times, the top surface being parallel to a surface of the tread 210.

Specifically, the first and second recessed members 121 and 122, the first and second protruded members 131 and 132, the third and fourth recessed members 123 and 124, and the third and fourth protruded members 133 and 134 described above are coupled to each other in consecutive order, and thus a wave shape is formed as a whole as illustrated in FIG. 2.

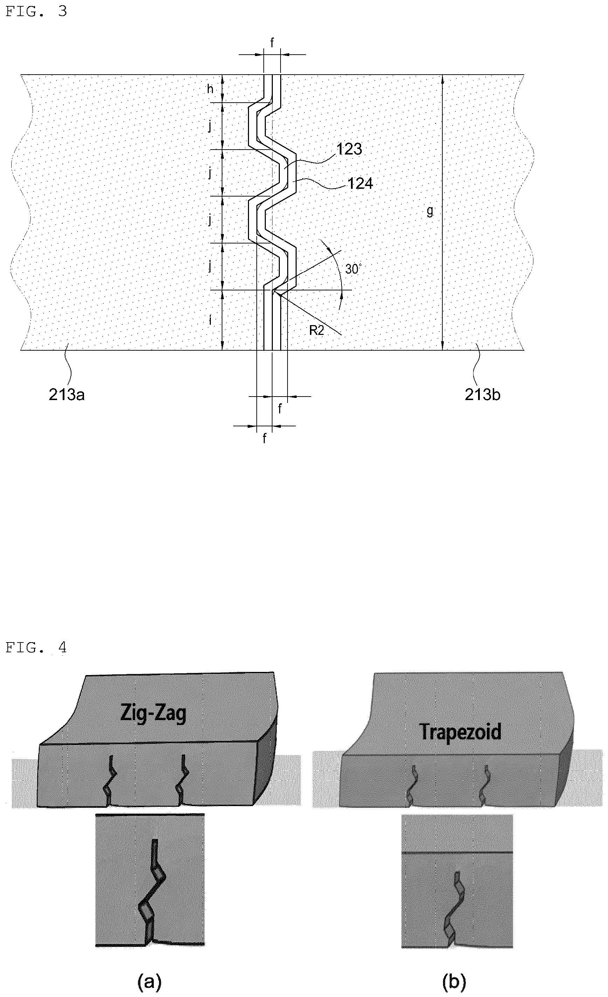

FIG. 3 is a cross-sectional view taken along line a-b in FIG. 2.

According to the invention, a side surface of the 3D kerf element 100 has a trapezoid shape which bends alternately one or more times, the side surface being parallel to the one or more blocks 213.

Regarding a feature described above, the third and fourth recessed members 123 and 124 formed between the first and second blocks 213a and 213b are illustrated as an example in FIG. 3 and are described in detail based thereon.

A thickness f of the 3D kerf element 100 is 0.2 mm to 0.4 mm and preferably 0.4 mm. In FIG. 3, the thickness is the thickness f of the third and fourth recessed members 123 and 124. Besides, the same is true of thickness f of the first and second flat members 111 and 112, the third and fourth flat members 113 and 114, the first and second recessed members 121 and 122, the first and second protruded members 131 and 132, or the third and fourth protruded members 133 and 134.

In addition, a shortest distance (j + j) from one end of a recessed part of the 3D kerf element 100 to one end of a protruded part of the 3D kerf element 100 is twice a shortest distance j between both ends of the third and fourth recessed members 123 and 124 illustrated in FIG. 3, and the shortest distance (j + j) is 2 mm to 3 mm and preferably 2.4 mm.

In addition, in FIG. 3, a depth g of the third and fourth members 123 and 124 is 7 mm.

Also, a radius R2 of a bent part of the fourth recessed member 124 is 0.4 mm, and an angle between a horizontal line in a right-left direction and a tangent line of the third recessed member 123 based on FIG. 3 is 30 degrees.

The protruded portion has one or more protruded members 131, 132, 133 and 134 which have a predetermined curvature and are formed to protrude in the other direction of the circumferential direction of the tire 200.

The protruded portion includes the first protruded member 131, the second protruded member 132, the third protruded member 133, and the fourth protruded member 134.

The first protruded member 131 is connected to the first recessed member 121. Specifically, one side of the first protruded member 131 is connected to the other side of the first recessed member 121, and the other side of the first protruded member 131 is continuously connected to one side of the third recessed member 123.

In addition, the first protruded member 131 is formed to have a predetermined curvature.

The second protruded member 132 is connected to the second recessed member 122 and is coupled to the first protruded member 131. Specifically, one side of the second protruded member 132 is connected to the other side of the second recessed member 122, and the other side of the second protruded member 132 is continuously connected to one side of the fourth recessed member 124.

In addition, the second protruded member 132 is formed to have a predetermined curvature, and the radius R1 of the second protruded member 132 is preferably 6.6021 mm as the radius of the first recessed member 121 and the third recessed member 123; however, the radius is not limited thereto.

The third protruded member 133 is connected to the third recessed member 123. Specifically, one side of the third protruded member 133 is connected to the other side of the third recessed member 123, and the other side of the third protruded member 133 is continuously connected to one side of the third flat member 113.

In addition, the third protruded member 133 is formed to have a predetermined curvature.

The fourth protruded member 134 is connected to the fourth recessed member 124 and is coupled to the third protruded member 133. Specifically, one side of the fourth protruded member 134 is connected to the other side of the fourth recessed member 124, and the other side of the fourth protruded member 134 is continuously connected to one side of the fourth flat member 114.

The flat portion, the recessed portion, and the protruded portion described above are continuously connected. Specifically, the first and second flat members 111 and 112, the first and second recessed members 121 and 122, and the first and second protruded members 131 and 132 are connected in consecutive order, and a shortest distance d1 between both ends of the first and second recessed members 121 and 122 is 5.5 mm equal to a shortest distance d2 between both ends of the first and second protruded members 131 and 132.

In addition, the third and fourth flat members 113 and 114, the third and fourth recessed members 123 and 124, and the third and fourth protruded members 133 and 134 are connected in consecutive order, and a shortest distance d3 between both ends of the third and fourth recessed members 123 and 124 is 5.5 mm equal to a shortest distance d4 between both ends of the third and fourth protruded members 133 and 134.

Also, a shortest distance (d1 + d2) from one end of the first and second recessed members 121 and 122 connected to the first and second flat members 111 and 112 to the other end of the first and second protruded members 131 and 132 is 5 mm to 12 mm and preferably 11 mm.

In addition, a shortest distance (d3 + d4) from one end of the third and fourth recessed members 123 and 124 connected to the third and fourth flat members 113 and 114 to the other end of the third and fourth protruded members 133 and 134 is 5 mm to 12 mm and preferably 11 mm.

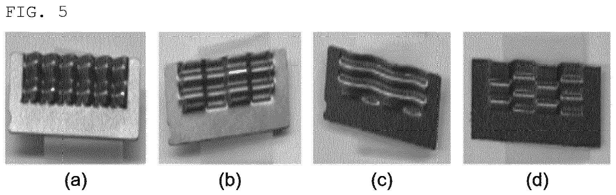

FIG. 4 is a perspective view illustrating shapes of the 3D kerf element of the pneumatic tire with a 3D kerf element according to the embodiment of the invention. FIG. 5 is a perspective view illustrating actual shapes of the 3D kerf element of the pneumatic tire with a 3D kerf element according to the embodiment of the invention.

The 3D kerf element 100 of the invention is provided to cause an interlocking phenomenon to occur between the blocks 213 applied to a pattern formed at the tread 210 of the tire 200 such that a ground grip force and handling and braking performances of the tire 200 are improved, and the frictional force changes depending on the shape of the 3D kerf element.

In this respect, in the invention, an experiment was carried out, in which the shape of the 3D kerf element 100 was realized as a zigzag shape, a trapezoid shape, a wave shape, or the like. FIG. 4 illustrates the zigzag shape and the trapezoid shape as examples of the shape of the 3D kerf element 100.

FIG. 5 illustrates 3D kerf elements manufactured to have a zigzag shape, a trapezoid shape, a wave-trapezoid shape, a semi-trapezoid shape in order to evaluate the frictional force depending on the shape of the 3D kerf element 100, before the 3D kerf element is applied to a tire.

In FIG. 5, (a) illustrates an exemplary 3D kerf element designed to have a zigzag shape at the surface of the tread 210 of the tire 200 and a zigzag shape in a depth direction from the surface of the tread 210, (b) illustrates an exemplary 3D kerf element designed to have a trapezoid shape at the surface of the tread 210 of the tire 200 and a trapezoid shape in the depth direction from the surface of the tread 210, (c) illustrates an inventive 3D kerf element designed to have a wave shape at the surface of the tread 210 of the tire 200 and a trapezoid shape in the depth direction from the surface of the tread 210, and (d) illustrates an exemplary 3D kerf element designed to have a trapezoid shape at the surface of the tread 210 of the tire 200 and a semi-trapezoid shape in the depth direction from the surface of the tread 210.

Experimental results thereof are shown in Table 1 and Table 2 provided below.

**Table 1**

| | Zigzag | Trapezoid | Wave-Trapezoid | Semi-Trapezoid |
|---|---|---|---|---|
| | 100 N | 97 N | 101 N | 100 N |
| | 100 N | 100 N | 100 N | 99 N |
| | 106 N | 108 N | 101 N | 99 N |

Table 1 shows results of evaluation of individual samples manufactured of SUS304 plates by performing the bending thereon, the samples having the zigzag shape in (a) of FIG. 5, the trapezoid shape in (b) of FIG. 5, the inventive wave-trapezoid shape in (c) of FIG. 5, and the semi-trapezoid shape in (d) of FIG. 5. First, in a dry condition, the 3D kerf element 100 has a difference in degree of the frictional force as Wave-Trapezoid Shape > Zigzag Shape = Semi-Trapezoid Shape > Trapezoid Shape, it was confirmed that when the 3D kerf element has the wave-trapezoid shape, the maximum frictional force is generated.

Next, in a wet condition, the 3D kerf element 100 has a difference in degree of the frictional force as Wave-Trapezoid Shape = Trapezoid Shape = Zigzag Shape > Semi-Trapezoid Shape, and it was confirmed that when the 3D kerf element has the semi-trapezoid shape, the minimum frictional force is generated.

Lastly, in a snow condition, the 3D kerf element 100 has a difference in degree of the frictional force as Trapezoid Shape > Zigzag Shape > Wave-Trapezoid Shape > Semi-Trapezoid Shape, and it was confirmed that when the 3D kerf element has the trapezoid shape, the maximum frictional force is generated.

As a result of evaluation of the frictional force, the frictional force was relatively high with the zigzag shape and the trapezoid shape; however, a defect rate was high due to those complicated shapes when the sample was manufactured of the SUS304 material by performing the bending thereon.

In addition, as a result of evaluation of design strength of the manufactured inventive wave-trapezoid shape and semi-trapezoid shape, the strength of the inventive wave-trapezoid shape was found to be higher than the strength of the semi-trapezoid shape by about 5%, and thus the 3D kerf element having the inventive wave-trapezoid shape was determined to be applied to a mold.

**Table 2**

| | General kerf | 3D kerf element (Wave-Trapezoid) |
|---|---|---|
| Snow handling | 100 | 108 |
| Snow braking | 100 | 107.4 |
| Snow acceleration | 100 | 105.3 |

Table 2 shows evaluation of snow performance, and the tire 200 was manufactured as a 235/45R18V tire for all seasons. As a result of performance evaluation, the snow handling was more improved by 8% than a general kerf, the snow braking was more improved by 7.4% than the general kerf, and the snow acceleration was more improved by 5.3% than the general kerf.

According to the above-described configuration, an effect of the invention is as follows. The snow performance can be improved by inserting a 3D kerf element into a kerf groove of a tire tread, the inventive 3D kerf element including a top surface having a wave shape and a side surface having a trapezoid shape.

In addition, according to the above-described configuration, another effect of the invention is as follows. Since one or more 3D kerf elements come into close contact with and are fixed between one or more blocks as being inserted into one or more kerf grooves, an interlocking phenomenon between blocks can occur to improve a ground grip force and handling and braking performances of the tire.

Effects of the invention are to be construed not to be limited to the above-mentioned effects but to include any effect that can be derived from configurations of the invention described in the detailed description of the preferred embodiment and claims of the invention.

The description of the invention described above is provided as an example, and a person of ordinary skill in the art to which the invention pertains can understand that it is possible to easily modify the invention to another embodiment without changing the technical idea or essential feature of the invention. Therefore, the embodiments described above have to be understood as exemplary embodiments in every aspect and not as examples to limit the invention. For example, each configurational element described as a single unit can be realized in a distributed manner. Similarly, the configurational element described in a distributed manner can be realized in a combined manner.

The scope of the invention has to be represented by the claims.

## Claims

1. A pneumatic tire with a 3D kerf element, comprising:
one or more 3D kerf elements (100); and
a tire (200) having a tread (210) and a shoulder (220) formed at a side surface of the tread (210),
wherein the tread (210) has:
one or more grooves (211) that are sunken toward a center of the tread (210) and are formed in a circumferential direction of the tire (200);
one or more kerf grooves (212) that are sunken toward the center of the tread (210) and are formed in a central axis direction of the tire (200); and
one or more blocks (213) which are divided by the one or more grooves (211) and the one or more kerf grooves (212),
wherein the one or more 3D kerf elements (100) come into close contact with and are fixed between the one or more blocks (213) as being inserted into the one or more kerf grooves (212),
wherein a top surface of the 3D kerf elements (100) has a wave shape which bends alternately one or more times, the top surface being parallel to a surface of the tread (210), **characterized in that**
the 3D kerf elements have a trapezoid shape in the depth direction from the surface of the tread (210).

2. The pneumatic tire with a 3D kerf element (100) according to claim 1,
wherein each of the 3D kerf elements (100) has:
a flat portion including a flat member (111) having a flat-plate shape;
a recessed portion including a recessed member (121) which has a predetermined curvature and is formed to recess in one direction of the circumferential direction; and
a protruded portion including a protruded member (131) which has a predetermined curvature and is formed to protrude in the other direction of the circumferential direction, and
wherein the flat portion, the recessed portion, and the protruded portion are continuously connected.

3. The pneumatic tire with a 3D kerf element (100) according to claim 2,
wherein the flat portion has:
a first flat member (111) which is positioned inside the kerf groove (212) at one side in the central axis direction;
a second flat member (112) which is coupled to the first flat member (111) and arranged side by side with the first flat member (111) in the circumferential direction;
a third flat member (113) which is positioned inside the kerf groove (212) at the other side in the central axis direction; and
a fourth flat member (114) which is coupled to the third flat member (113) and arranged side by side with the third flat member (113) in the circumferential direction, and
wherein the flat portion comes into close contact with and is fixed between a pair of adjacent blocks (213a, 213b) among the one or more blocks (213).

4. The pneumatic tire with a 3D kerf element (100) according to claim 3,
wherein the recessed portion has:
a first recessed member (121) which is connected to the first flat member (111) in the central axis direction; and
a second recessed member (122) which is connected to the second flat member (112) in the central axis direction, and is coupled to the first recessed member (121) and arranged side by side with the first recessed member (121) in the circumferential direction,
wherein the protruded portion has:
a first protruded member (131) which is connected to the first recessed member (121) in the central axis direction; and
a second protruded member (132) which is connected to the second recessed member (122) in the central axis direction and is coupled to the first protruded member (131) and arranged side by side with the first protruded member (131) in the circumferential direction,
wherein the first and second flat members (111, 112), the first and second recessed members (121, 122), and the first and second protruded members (131, 132) are connected in consecutive order, and
wherein a shortest distance between both ends of the first and second recessed members (121, 122) is equal to a shortest distance between both ends of the first and second protruded members (131, 132).

5. The pneumatic tire with a 3D kerf element (100) according to claim 3,
wherein the protruded portion has:
a third protruded member (133) which is connected to the third flat member (113) in the central axis direction; and
a fourth protruded member (134) which is connected to the fourth flat member (114) in the central axis direction and is coupled to the third protruded member (123) and arranged side by side with the third protruded member (123) in the circumferential direction,
wherein the recessed portion has:
a third recessed member (123) which is connected to the third protruded member (133) in the central axis direction; and
a fourth recessed member (124) which is connected to the fourth protruded member (134) in the central axis direction and is coupled to the third recessed member (123) and arranged side by side with the third recessed member (123) in the circumferential direction,
wherein the third and fourth flat members (113, 114), the third and fourth protruded members (133, 134), and the third and fourth recessed members (123, 124) are connected in consecutive order, and
wherein a shortest distance between both ends of the third and fourth recessed members (123, 124) is equal to a shortest distance between both ends of the third and fourth protruded members (133, 134).

6. The pneumatic tire with a 3D kerf element (100) according to claim 4 or 5,
wherein a shortest distance from one end of the first and second recessed members (121, 122) connected to the first and second flat members (111, 112) to the other end of the first and second protruded members (121, 122) is 5 mm to 12 mm.

7. The pneumatic tire with a 3D kerf element (100) according to claim 1,
wherein the 3D kerf elements (100) have a thickness of 0.2 mm to 0.4 mm.

8. The pneumatic tire with a 3D kerf element (100) according to claim 1,
wherein the trapezoid shape bends alternately one or more times, and
wherein a shortest distance (j+j) from one end of a recessed part of the 3D kerf element (100) in the center axis direction to one end of a protruded part of the 3D kerf element (100) in the center axis direction is 2 mm to 3 mm.

## Patentansprüche

1. Pneumatischer Reifen mit einem 3D-Kerbenelement, der folgende Merkmale aufweist:
ein oder mehrere 3D-Kerbenelemente (100); und
einen Reifen (200) mit einer Lauffläche (210) und einer Schulter (220), die an einer Seitenoberfläche der Lauffläche (210) gebildet ist,
wobei die Lauffläche (210) folgende Merkmale aufweist:
eine oder mehrere Rillen (211), die zu einer Mitte der Lauffläche (210) hin versenkt sind und in einer Umfangsrichtung des Reifens (200) gebildet sind;
eine oder mehrere Kerbenrillen (212), die zu der Mitte der Lauffläche (210) hin versenkt sind und in einer Mittelachsenrichtung des Reifens (200) gebildet sind; und
einen oder mehrere Blöcke (213), die durch die eine oder die mehreren Rillen (211) und die eine oder die mehreren Kerbenrillen (212) geteilt sind,
wobei das eine oder die mehreren 3D-Kerbenelemente (100) in engen Kontakt mit dem einen oder den mehreren Blöcken (213) treten und zwischen diesen fixiert sind, wenn sie in die eine oder die mehreren Kerbenrillen (212) eingeführt werden,
wobei eine obere Oberfläche der 3D-Kerbenelemente (100) eine Wellenform aufweist, die abwechselnd einmal oder mehrere Male gebogen ist, wobei die obere Oberfläche parallel zu einer Oberfläche der Lauffläche (210) verläuft, **dadurch gekennzeichnet, dass**
die 3D-Kerbenelemente eine Trapezform in der Tiefenrichtung von der Oberfläche der Lauffläche (210) aufweisen.

2. Pneumatischer Reifen mit einem 3D-Kerbenelement (100) gemäß Anspruch 1, wobei jedes der 3D-Kerbenelemente (100) folgende Merkmale aufweist:
einen flachen Abschnitt mit einem flachen Bauteil (111) mit einer Flachplattenform;
einen zurückgesetzten Abschnitt mit einem zurückgesetzten Bauteil (121), das eine vorbestimmte Krümmung aufweist und derart gebildet ist, dass es in einer Richtung der Umfangsrichtung zurückgesetzt ist; und
einen vorstehenden Abschnitt mit einem vorstehenden Bauteil (131), das eine vorbestimmte Krümmung aufweist und derart gebildet ist, dass es in der anderen Richtung der Umfangsrichtung vorsteht, und
wobei der flache Abschnitt, der zurückgesetzte Abschnitt und der vorstehende Abschnitt durchgehend verbunden sind.

3. Pneumatischer Reifen mit einem 3D-Kerbenelement (100) gemäß Anspruch 2, wobei der flache Abschnitt folgende Merkmale aufweist:
ein erstes flaches Bauteil (111), das auf der Innenseite der Kerbenrille (212) auf einer Seite in der Mittelachsenrichtung positioniert ist;
ein zweites flaches Bauteil (112), das an das erste flache Bauteil (111) gekoppelt ist und neben dem ersten flachen Bauteil (111) in der Umfangsrichtung angeordnet ist;
ein drittes flaches Bauteil (113), das auf der Innenseite der Kerbenrille (212) auf der anderen Seite in der Mittelachsenrichtung positioniert ist; und
ein viertes flaches Bauteil (114), das an das dritte flache Bauteil (113) gekoppelt ist und neben dem dritten flachen Bauteil (113) in der Umfangsrichtung angeordnet ist, und
wobei der flache Abschnitt in engen Kontakt mit einem Paar angrenzender Blöcke (213a, 213b) unter dem einen oder den mehreren Blöcken (213) tritt und zwischen diesem fixiert ist.

4. Pneumatischer Reifen mit einem 3D-Kerbenelement (100) gemäß Anspruch 3,
wobei der zurückgesetzte Abschnitt folgende Merkmale aufweist:
ein erstes zurückgesetztes Bauteil (121), das mit dem ersten flachen Bauteil (111) in der Mittelachsenrichtung verbunden ist; und
ein zweites zurückgesetztes Bauteil (122), das mit dem zweiten flachen Bauteil (112) in der Mittelachsenrichtung verbunden ist und an das erste zurückgesetzte Bauteil (121) gekoppelt ist und neben dem ersten zurückgesetzten Bauteil (121) in der Umfangsrichtung angeordnet ist,
wobei der vorstehende Abschnitt folgende Merkmale aufweist:
ein erstes vorstehendes Bauteil (131), das mit dem ersten zurückgesetzten Bauteil (121) in der Mittelachsenrichtung verbunden ist; und
ein zweites vorstehendes Bauteil (132), das mit dem zweiten zurückgesetzten Bauteil (122) in der Mittelachsenrichtung verbunden ist und an das erste vorstehende Bauteil (131) gekoppelt ist und neben dem ersten vorstehenden Bauteil (131) in der Umfangsrichtung angeordnet ist,
wobei das erste und zweite flache Bauteil (111, 112), das erste und zweite zurückgesetzte Bauteil (121, 122) und das erste und zweite vorstehende Bauteil (131, 132) aufeinanderfolgend verbunden sind, und
wobei ein kürzester Abstand zwischen beiden Enden des ersten und zweiten zurückgesetzten Bauteils (121, 122) gleich einem kürzesten Abstand zwischen beiden Enden des ersten und zweiten vorstehenden Bauteils (131, 132) ist.

5. Pneumatischer Reifen mit einem 3D-Kerbenelement (100) gemäß Anspruch 3,
wobei der vorstehende Abschnitt folgende Merkmale aufweist:
ein drittes vorstehendes Bauteil (133), das mit dem dritten flachen Bauteil (113) in der Mittelachsenrichtung verbunden ist; und
ein viertes vorstehendes Bauteil (134), das mit dem vierten flachen Bauteil (114) in der Mittelachsenrichtung verbunden ist und an das dritte vorstehende Bauteil (123) gekoppelt ist und neben dem dritten vorstehenden Bauteil (123) in der Umfangsrichtung angeordnet ist,
wobei der zurückgesetzte Abschnitt folgende Merkmale aufweist:
ein drittes zurückgesetztes Bauteil (123), das mit dem dritten vorstehenden Bauteil (133) in der Mittelachsenrichtung verbunden ist; und
ein viertes zurückgesetztes Bauteil (124), das mit dem vierten vorstehenden Bauteil (134) in der Mittelachsenrichtung verbunden ist und an das dritte zurückgesetzte Bauteil (123) gekoppelt ist und neben dem dritten zurückgesetzten Bauteil (123) in der Umfangsrichtung angeordnet ist,
wobei das dritte und vierte flache Bauteil (113, 114), das dritte und vierte vorstehende Bauteil (133, 134) und das dritte und vierte zurückgesetzte Bauteil (123, 124) aufeinanderfolgend verbunden sind, und
wobei ein kürzester Abstand zwischen beiden Enden des dritten und vierten zurückgesetzten Bauteils (123, 124) gleich einem kürzesten Abstand zwischen beiden Enden des dritten und vierten vorstehenden Bauteils (133, 134) ist.

6. Pneumatischer Reifen mit einem 3D-Kerbenelement (100) gemäß Anspruch 4 oder 5,
wobei ein kürzester Abstand von einem Ende des ersten und zweiten zurückgesetzten Bauteils (121, 122), das mit dem ersten und zweiten flachen Bauteil (111, 112) verbunden ist, zu dem anderen Ende des ersten und zweiten vorstehenden Bauteils (121, 122) 5 mm bis 12 mm beträgt.

7. Pneumatischer Reifen mit einem 3D-Kerbenelement (100) gemäß Anspruch 1,
wobei die 3D-Kerbenelemente (100) eine Dicke von 0,2 mm bis 0,4 mm aufweisen.

8. Pneumatischer Reifen mit einem 3D-Kerbenelement (100) gemäß Anspruch 1,
wobei die Trapezform abwechselnd einmal oder mehrere Male gebogen ist, und
wobei ein kürzester Abstand (j+j) von einem Ende eines zurückgesetzten Teils des 3D-Kerbenelements (100) in der Mittelachsenrichtung zu einem Ende eines vorstehenden Teils des 3D-Kerbenelements (100) in der Mittelachsenrichtung 2 mm bis 3 mm beträgt.

## Revendications

1. Pneumatique pourvu d'un élément entaille en 3D, comprenant :
un ou plusieurs éléments entailles en 3D (100) ; et
un pneu (200) comportant une bande de roulement (210) et un épaulement (220) formé au niveau d'une surface latérale de la bande de roulement (210),
dans lequel la bande de roulement (210) comporte :
une ou plusieurs rainures (211) qui sont creusées vers un centre de la bande de roulement (10) et sont formées dans une direction circonférentielle du pneu (200) ;
une ou plusieurs rainures-entailles (212) qui sont creusées vers le centre de la bande de roulement (210) et sont formées dans une direction d'axe central du pneu (200) ; et
un ou plusieurs blocs (213) qui sont divisés par les une ou plusieurs rainures (211) et les une ou plusieurs rainures-entailles (212),
dans lequel les un ou plusieurs éléments entailles en 3D (100) entrent en contact étroit avec les un ou plusieurs blocs (213) et sont fixés entre ceux-ci quand ils sont insérés dans les une ou plusieurs rainures-entailles (212),
dans lequel une surface supérieure des éléments entailles en 3D (100) présente une forme de vague qui se plie en alternance une ou plusieurs fois, la surface supérieure étant parallèle à une surface de la bande de roulement (210), **caractérisé en ce que**
les éléments entailles en 3D présentent une forme trapézoïdale dans la direction de profondeur depuis la surface de la bande de roulement (210).

2. Pneumatique pourvu d'un élément entaille en 3D (100) selon la revendication 1,
dans lequel chacun des éléments entailles en 3D (100) comporte :
une partie plate incluant un élément plat (111) présentant une forme de plaque plate ;
une partie enfoncée incluant un élément enfoncé (121) qui présente une courbure prédéterminée et est formée pour s'enfoncer dans une direction de la direction circonférentielle ; et
une partie saillante incluant un élément saillant (131) qui présente une courbure prédéterminée et est formée pour faire saillie dans l'autre direction de la direction circonférentielle, et
dans lequel la partie plate, la partie enfoncée et la partie saillante sont reliées de manière continue.

3. Pneumatique pourvu d'un élément entaille en 3D (100) selon la revendication 2,
dans lequel la partie plate comporte :
un premier élément plat (111) qui est positionné à l'intérieur de la rainureentaille (212) au niveau d'un côté dans la direction d'axe central ;
un deuxième élément plat (112) qui est couplé au premier élément plat (111) et agencé côte à côte avec le premier élément plat (111) dans la direction circonférentielle ;
un troisième élément plat (113) qui est positionné à l'intérieur de la rainureentaille (212) au niveau de l'autre côté dans la direction d'axe central ; et
un quatrième élément plat (114) qui est couplé au troisième élément plat (113) et agencé côte à côte avec le troisième élément plat (113) dans la direction circonférentielle, et
dans lequel la partie plate entre en contact étroit avec une paire de blocs (213a, 213b) adjacents parmi les un ou plusieurs blocs (213) et est fixée entre ceux-ci.

4. Pneumatique pourvu d'un élément entaille en 3D (100) selon la revendication 3,
dans lequel la partie enfoncée comporte :
un premier élément enfoncé (121) qui est relié au premier élément plat (111) dans la direction d'axe central ; et
un deuxième élément enfoncé (122) qui est relié au deuxième élément plat (112) dans la direction d'axe central, et est couplé au premier élément enfoncé (121) et agencé côte à côte avec le premier élément enfoncé (121) dans la direction circonférentielle,
dans lequel la partie saillante comporte :
un premier élément saillant (131) qui est relié au premier élément enfoncé (121) dans la direction d'axe central ; et
un deuxième élément saillant (132) qui est relié au deuxième élément enfoncé (122) dans la direction d'axe central et est couplé au premier élément saillant (131) et agencé côte à côte avec le premier élément saillant (131) dans la direction circonférentielle,
dans lequel les premier et deuxième éléments plats (111, 112), les premier et deuxième éléments enfoncés (121, 122) et les premier et deuxième éléments saillants (131, 132) sont reliés dans un ordre consécutif, et
dans lequel une distance la plus courte entre les deux extrémités des premier et deuxième éléments enfoncés (121, 122) est égale à une distance la plus courte entre les deux extrémités des premier et deuxième éléments saillants (131, 132).

5. Pneumatique pourvu d'un élément entaille en 3D (100) selon la revendication 3,
dans lequel la partie saillante comporte :
un troisième élément saillant (133) qui est relié au troisième élément plat (113) dans la direction d'axe central ; et
un quatrième élément saillant (134) qui est relié au quatrième élément plat (114) dans la direction d'axe central et est couplé au troisième élément saillant (123) et agencé côte à côte avec le troisième élément saillant (123) dans la direction circonférentielle,
dans lequel la partie enfoncée comporte :
un troisième élément enfoncé (123) qui est relié au troisième élément saillant (133) dans la direction d'axe central ; et
un quatrième élément enfoncé (124) qui est relié au quatrième élément saillant (134) dans la direction d'axe central et est couplé au troisième élément enfoncé (123) et agencé côte à côte avec le troisième élément enfoncé (123) dans la direction circonférentielle,
dans lequel les troisième et quatrième éléments plats (113, 114), les troisième et quatrième éléments saillants (133, 134) et les troisième et quatrième éléments enfoncés (123, 124) sont reliés dans un ordre consécutif, et
dans lequel une distance la plus courte entre les deux extrémités des troisième et quatrième éléments enfoncés (123, 124) est égale à une distance la plus courte entre les deux extrémités des troisième et quatrième éléments saillants (133, 134).

6. Pneumatique pourvu d'un élément entaille en 3D (100) selon la revendication 4 ou 5,
dans lequel une distance la plus courte depuis une extrémité des premier et deuxième éléments enfoncés (121, 122) reliés aux premier et deuxième éléments plats (111, 112) jusqu'à l'autre extrémité des premier et deuxième éléments saillants (121, 122) fait de 5 mm à 12 mm.

7. Pneumatique pourvu d'un élément entaille en 3D (100) selon la revendication 1,
dans lequel les éléments entailles en 3D (100) présentent une épaisseur de 0,2 mm à 0,4 mm.

8. Pneumatique pourvu d'un élément entaille en 3D (100) selon la revendication 1,
dans lequel la forme trapézoïdale se plie en alternance une ou plusieurs fois, et
dans lequel une distance la plus courte (j+j) depuis une extrémité d'une partie enfoncée de l'élément entaille en 3D (100) dans la direction d'axe central jusqu'à une extrémité d'une partie saillante de l'élément entaille en 3D (100) dans la direction d'axe central fait de 2 mm à 3 mm.
